# EUROPÄISCHE PATENTSCHRIFT

(11) **EP 0 809 455 B1**
(45) Veröffentlichungstag und Bekanntmachung des Hinweises auf die Patenterteilung: **14.10.1998**
(21) Anmeldenummer: 96903966.8
(22) Anmeldetag: 02.02.1996
(51) Int. Cl.: A47J 31/44

(54) **KALTWASSERVORRATSBEHÄLTER FÜR EINE ELEKTRISCHE HAUSHALTSBRÜHGETRÄNKEMASCHINE**
COLD WATER TANK FOR AN ELECTRIC DOMESTIC INFUSED BEVERAGE MACHINE
RESERVOIR D'EAU FROIDE DESTINE A UN APPAREIL ELECTROMENAGER PERMETTANT DE PREPARER DES BOISSONS CHAUDES

(30) Priorität: 14.02.1995 DE 19504839
(43) Veröffentlichungstag der Anmeldung: 03.12.1997
(73) Patentinhaber: Braun Aktiengesellschaft, Frankfurt am Main (DE)
(72) Erfinder: OPPERMANN, Günter, D-63128 Dietzenbach (DE); SCHAMBERG, Stefan, D-61250 Usingen (DE); KLEEMANN, Christof, D-61476 Kronberg (DE)
(86) Internationale Anmeldenummer: EP9600439
(87) Internationale Veröffentlichungsnummer: WO9625078

(56) Entgegenhaltungen:
- EP-A- 0 404 688
- WO-A-90/13250
- WO-A-95/03733
- DE-C- 3 938 446
- DE-U- 9 319 872

## Beschreibung

Die Erfindung betrifft einen Kaltwasservorratsbehälter für eine elektrische Haushaltsbrühgetränkemaschine nach dem Oberbegriff des Patentanspruchs 1 (vgl. DE-U-9319872).

Ein gleichartiger Kaltwasservorratsbehälter ist aus der WO 90/13250 bekannt. Der Kaltwasservorratsbehälter ist von einer Gehäusewand der Haushaltsbrühgetränkemaschine umgeben. Diese Gehausewand zentriert den Kaltwasservorratsbehälter einerseits beim Einsetzen und andererseits gibt sie ihm in Betriebslage einen sicheren Halt. Zum Wasserholen weist der Kaltwasservorratsbehälter an seinem Boden einen nach außen und nach unten gerichteten Rohrstutzen auf, in dem ein in Richtung des Kaltwasservorratsbehälters öffnendes Rückschlagventil ausgebildet ist. Der Rohrstutzen greift in Betriebslage der Haushaltsbrühgetränkemaschine in eine Öffnung eines nach unten winklig abgebogenen Anschlußstückes ein, das Teil des Gehäuses der Haushaltsbrühgetränkemaschine ist. In dem einteilig mit dem Gehäuse verbundenen Rohrstück ist weiterhin ein als Zapfen hervorstehender Anschlag ausgebildet, der beim Einsetzen des Kaltwasservorratsbehälters in das Gehäuse das von einer Kugel gesteuerte Rückschlagventil in seine Offenstellung bringt. Durch das Zusammenwirken von Anschlag und Rückschlagventil soll sichergestellt werden, daß erst bei lagerichtig eingesetztem Kaltwasservorratsbehälter Wasser aus dem Auslaß abfließen kann und somit nicht vorher, also noch bei nicht dichter Verbindung von Rohrstutzen und Anschlußstück, in das den Kaltwasservorratsbehälter einbindende Gehäuse eindringen kann, von wo es leicht an die stromführenden Anschlüsse des Durchlauferhitzers gelangt und so die Haushaltsbrühgetränkemaschine unter Strom stellen kann.

Bei häufigem Betrieb des Kaltwasservorratsbehälters kann es vorkommen, daß das am Rohrstutzen des Ausgangs ausgebildete Rückschlagventil aufgrund von Verschmutzung im Betrieb leicht undicht wird, was dann beim Wasserholen zum Tropfen des Kaltwasservorratsbehälters führt. Auch das häufige Einsetzen des Kaltwasservorratsbehälters in das Gehäuse kann aufgrund von Verschleiß durch Abrieb sehr leicht zu einer undichten Stelle zwischen dem Rohrstutzen des Kaltwasservorratsbehälters und dem am Gehäuse ausgebildeten Anschlußstück führen. Dies führt dann letztendlich auch dazu, daß an der Verbindungsstelle zwischen dem Rohrstutzen und dem Anschlußstück Wasser abtropft, welches dann wiederum in den unterhalb des Kaltwasservorratsbehälters ausgebildeten Aufnahmeraum des Durchlauferhitzers gelangt und somit ebenfalls leicht zu Kurzschlüssen an der Maschine führen kann.

Ein weiterer Nachteil dieses Kaltwasservorratsbehälters besteht darin, daß sich beispielsweise beim Reinigen in einer Geschirrspülmaschine Schmutzreste in dem geschlossenen Rückschlagventil abgelagern können, die dann möglicherweise beim nächsten Betrieb der Haushaltsbrühgetränkemaschine in den mit Kaffeemehl gefüllten Filter gelangen.

Aufgabe der Erfindung ist es nunmehr, einen Kaltwasservorratsbehälter für eine Haushaltsbrühgetränkemaschine zu schaffen, mit dem ein Auslaufen von Wasser im Betrieb der Maschine in jedem Fall vermieden wird, der leicht zu reinigen ist, und wobei die Handhabung des inneren Behälterteils auf einfachen Weige verbessert wird.

Diese Aufgabe wird erfindungsgemäß durch die Merkmale des kennzeichnenden Teils des Patentanspruchs 1 gelöst.

Durch die Aufteilung des Kaltwasservorratsbehälters in einen inneren und einen äußeren Behälterteil wird auch bei undichter Verbindung vom inneren zum äußeren Behälterteil ein Auslaufen von Wasser in die Haushaltsbrühgetränkemaschine auf alle Fälle vermieden, da der äußere Behälterteil rundum dicht ist und über seinen Auslaß dauerhaft fest mit der Einlaufseite des Durchlauferhitzers verbunden ist, so daß, wenn tatsächlich einmal Wasser an der Öffnung des inneren Behälterteils austritt, dieses ausschließlich nur in den geschlossenen äußeren Behälterteil und von dort über den Auslaß und das Anschlußstück zum Durchlauferhitzer abfließt und nicht irgendwo unkontrolliert in die Maschine fließt. Dadurch, daß die Öffnung des inneren Behälterteils frei durchgängig ist, d.h., kein Rückschlagventil oder sonstige schmutzablagernde Bauteile aufweist, kann auch der innere Behälterteil leicht und gründlich gereinigt werden.

Dabei wird die Handhabung des inneren Behälterteils verbessert, wobei einer Bedienungsperson eine gute Grifffläche angeboten wird, die weiter aus dem äußeren Behälterteil herausragt als der restliche Rand des inneren Behälterteils. Dieser großflächigere Griffbereich kann mit einer Handhabe (Anspruch 2) versehen sein, die zum besseren Greifen dann noch mit Rippen oder sonstigen Erhebungen versehen ist.

Die Rippe kann dabei so umlaufend an den nach außen zeigenden Seitenwänden verlaufen, daß bei eingesetztem inneren Behälterteil diese Rippe am oberen Rand des äußeren Behälterteils anliegt und so den inneren Behälterteil in axialer Richtung fixiert (Anspruch 5). Die Rippe verschließt auch den zwischen dem äußeren und inneren Behälterteil ausgebildeten Spalt von oben her, wenn das innere Behälterteil seine Betriebslage eingenommen hat und wenn die Rippe die äußere Seitenwand im Bereich des Randes des äußeren Behälterteils vollständig umläuft. Hierdurch wird auch vermieden, daß Staub oder sonstige Schmutzpartikel zwischen diese beiden Behälterteile gelangen.

Durch die Merkmale des Patentanspruchs 4 wird auch der innere Behälterteil verschlossen, so daß dieser ebenfalls vor dem Eindringen von Schmutz geschützt wird. Durch das getrennte Verschließen des inneren und äußeren Behälterteils durch einen Deckel (inneres Behälterteil) bzw. durch eine Rippe (äußeres Behälterteil) wird - im Gegensatz zu einem gemeinsamen Deckel - der aus dem äußeren Behälterteil herausragende Abschnitt des inneren Behälterteils weiterhin zur besseren Handhabung leicht kenntlich gemacht.

Eine einfachere Handhabung des inneren Behälterteils läßt sich durch die Merkmale des Patentanspruchs 6 erreichen, wobei allerdings dann zur schnelleren und besseren Unterscheidung das äußere Behälterteil vorteilhafterweise nicht transparent ausgeführt sein sollte. Durch die Transparenz des inneren Behälterteils kann auch leicht der Füllstand des Kaltwasservorratsbehälters ermittelt werden.

Ein besonders leichtes Erkennen des Füllstandes wird durch die Merkmale des Patentanspruchs 7 erreicht. Da der Abstand der Seitenwandungen des inneren gegenüber dem äußeren Behälterteil nur sehr gering ist, reicht der über den Durchbruch auf das innere Behälterteil einfallende Lichtanteil aus, den Füllstand von außen her ausreichend zu beleuchten. Der Füllstand kann noch durch die Anbringung einer Meßskala an der Seitenwand des inneren Behälterteils verbessert werden (Anspruch 8).

Eine optische Trennung zwischen dem inneren und äußeren Behälterteil wird insbesondere durch die Merkmale des Patentanspruch 9 erreicht, was die Bedienung der Haushaltsbrühgetränkemaschine vereinfacht, indem das innere Behälterteil sich besonders gut vom äußeren Behälterteil abhebt.

Durch die Ausbildung eines Wasserfilters im Boden des inneren Behälterteils (Anspruch 10) wird die Handhabung der Brühgetränkemaschine weiter vereinfacht. Sobald man nämlich das innere Behälterteil aus dem äußeren Behälterteil entfernt hat, läßt sich der Wasserfilter zum Zwecke des Austausches leichter entnehmen. Dabei kann dann gleichzeitig der innere Behälterteil gereinigt und wieder mit einem neuen Wasserfilter versehen werden. Der Austausch des Wasserfilters sollte nur dann erfolgen können, wenn der innere Behälterteil aus dem äußeren Behälterteil herausgenommen wurde. Dazu können beispielsweise zwischen dem inneren und äußeren Behälterteil Rastmittel vorhanden sein, die den Wasserfilter fest im inneren Behälterteil sichern und die vorteilhafterweise nur dann zugänglich sind, wenn erfindungsgemäß der innere Behälterteil von der Brühgetränkemaschine entfernt wurde.

Durch die Merkmale des Patentanspruchs 11 wird dem inneren Behälterteil ein sicherer Halt im eingesetzten Zustand verliehen, so daß sich das innere Behälterteil auch bei einwirkenden Erschütterungen während des Transports nicht vom äußeren Behälterteil löst.

Ein Ausführungsbeispiel der Erfindung ist ist in der Zeichnung dargestellt und wird im folgenden näher erläutert. Es zeigen:
- Fig. 1: perspektivische Teilansicht von der rechten Seite auf den oberen Bereich einer elektrischen Haushaltsbrühgetränkemaschine mit ordnungsgemäß in das äußere Behälterteil eingesetztem inneren Behälterteil,
- Fig. 2: perspektivische Seitenansicht in verkleinertem Maßstab auf die komplette Haushaltsbrühgetränkemaschine von rechts, wobei die Brühgetränkemaschine gegenüber Fig. 1 etwas mehr zum Betrachter hin gedreht wurde und wobei bereits das innere Behälterteil teilweise aus dem äußeren Behälterteil herausgehoben wurde, ohne dabei eine Hand zu zeigen und
- Fig. 3: gleiche perspektivische Seitenansicht auf die Haushaltsbrühgetränkemaschine nach Fig. 2, wobei allerdings das innere Behälterteil aus dem äußeren Behälterteil herausgenommen und in der Zeichnung neben der Brühgetränkemaschine dargestellt wurde.

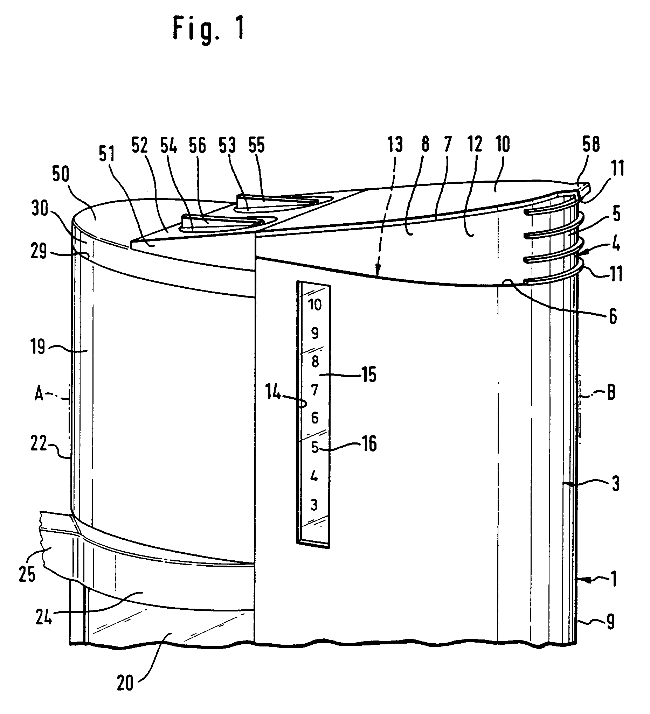

Nach den Figuren 1 bis 3 besteht die elektrische Haushaltsbrühgetränkemaschine 62 aus einem im hinteren Bereich ausgebildeten Kaltwasservorratsbehälter 1, der im wesentlichen vom Sockel 2 aus nach oben säulenartig verläuft und eine im Querschnitt im wesentlichen U-förmig verlaufenden Außen- bzw. Seitenfläche 9 aufweist. Der Kaltwasservorratsbehälter 1 besteht im wesentlichen aus einem äußeren Behälterteil 3 und einem in den äußeren Behälterteil 3 eingesetzten inneren Behälterteil 4. Der innere Behälterteil 4 ragt im eingesetzten Zustand, also in Betriebslage, mit seinem oberen Ende 5, wie dies Fig. 1 deutlich zeigt, aus dem oberen Rand 6 des äußeren Behälterteils 3 nach oben heraus.

Der obere Rand 6 des äußeren Behälterteils 3 verläuft nach hinten (Bereich B) horizontal oder auch, wie in den Figuren 1 bis 3 zu sehen, leicht nach hinten abfallend, während der obere Rand 7 des inneren Behälterteils 4 nach vorne (in Richtung A) zur Haushaltsbrühgetränkemaschine 62 geneigt abfallend verläuft, so daß der zwischen dem oberen Rand 6 des äußeren Behälterteils 3 und dem oberen Rand 7 des inneren Behälterteils 4 gebildete U-förmige Scheibenabschnitt 8 des inneren Behälterteils 4 wie ein flach abgestelltes Kuchenstück aussieht, allerdings nur dann, wenn auf dem oberen Rand 7 des inneren Behälterteils 4 der als flache Scheibe ausgebildete und an den Abschnitt 8 angepaßte Deckel 10 aufgesetzt ist und somit das innere Behälterteil 4 verschließt. Der Deckel 10 schließt mit dem äußeren Rand 7 des inneren Behälterteils 4 ab und ist selbst eben ausgebildet.

Am hinteren Bereich B des inneren Behälterteils 4 sind vier übereinander angeordnete Rippen 11 hervorstehend ausgebildet, wovon die untere Rippe 11 gemäß Fig. 1 am Rand 6 des äußeren Behälterteils 3 anliegt und somit das innere Behälterteil 4 in axialer Richtung auf Anlage hält. Die Seitenwände 12 des inneren Behälterteils 4 verlaufen im eingesetzten Zustand zum äußeren Behälterteil 3 im wesentlichen parallel und verlaufen auch nur mit sehr geringem Abstand zu den Seitenwänden 9 des äußeren Behälterteils 3. Dadurch bildet sich zwischen den Seitenwänden 9 und 12 nur ein sehr geringer Ringspalt 13 (nicht direkt sichtbar), über den nahezu kein Schmutz eindringen kann. Zum Verschließen dieses Ringspaltes 13 kann die untere Rippe 11 umlaufend am inneren Behälterteil 4 ausgebildet sein, so daß sie den Ringspalt 13 von oben her abdeckt, was aber in den Figuren nicht dargestellt ist.

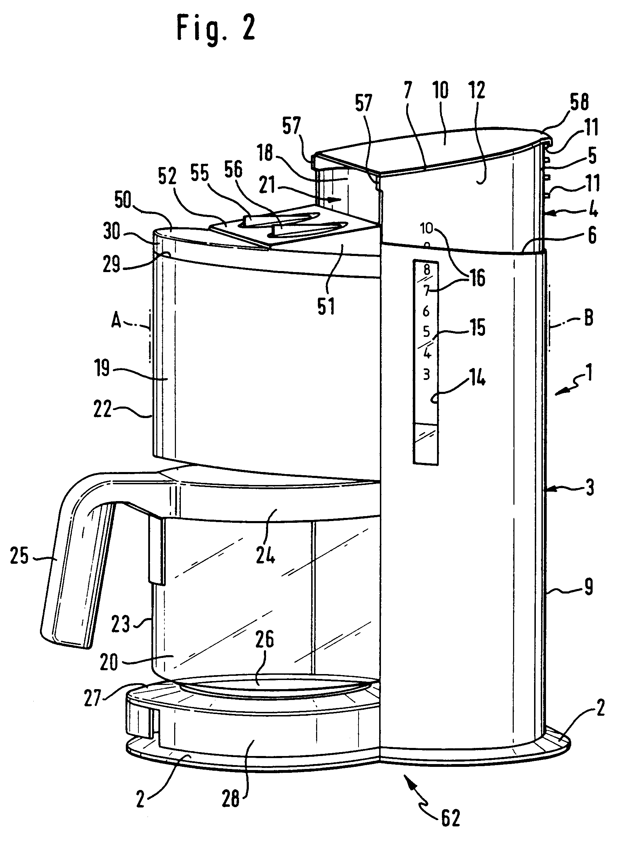

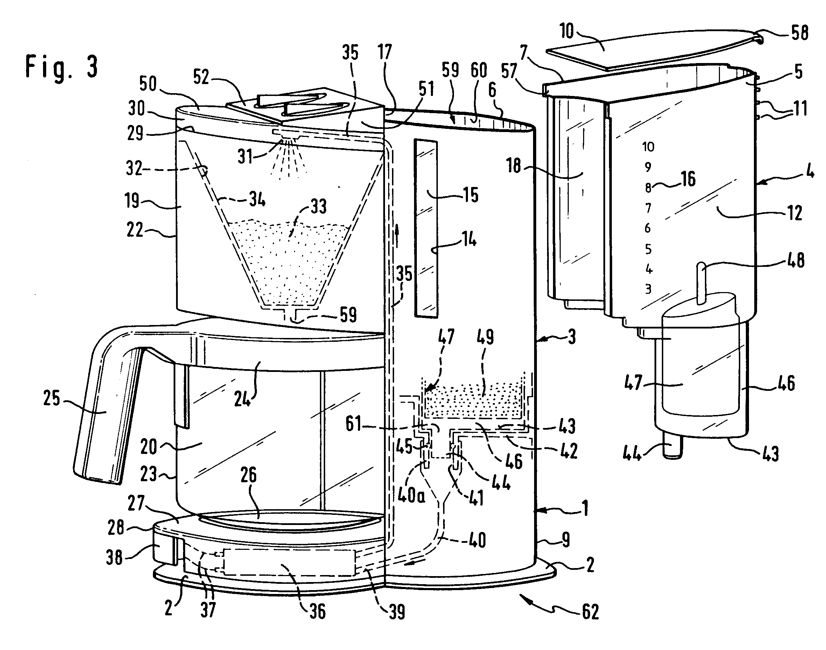

Seitlich am rechten äußeren Behälterteil 3 ist im vorderen Bereich ein rechteckförmiger Durchbruch 14 ausgebildet, der durch eine transparente Scheibe 15 nach außen dicht verschlossen ist. Hinter der Scheibe 15 ist eine Meßskala 16 mit Zahlen von 3 bis 10 zu erkennen, die auf gleicher Höhe am inneren Behälterteil 4 aufgedruckt sind, wie dies Fig. 3 besonders deutlich zeigt. Ein auf der Meßskala 16 sich einstellender Füllstand (nicht dargestellt) von Wasser zeigt an, welche Menge an Wasser im inneren Behälterteil 4 vorhanden ist und welche Anzahl von Tassen diese Menge nach dem Brühvorgang ergibt. Am unteren Bereich des äußeren Behälterteils 3 erweitert sich die Seitenwand 9 über den Sockel 2 zu einem Ringbund. Der Sockel 2 dient als geschlossener Ringbund, der auch den vorderen Teil der Haushaltsbrühgetränkemaschine umschließt, wie dies aus den Figuren 2 und 3 hervorgeht.

Die vordere Stirnwand 18 des inneren Behälterteils 4 ist konkav ausgebildet, während die Stirnwand 17 des äußeren Behälterteils 3, entsprechend angepaßt, konvex ausgebildet ist. Das sich an die Stirnwände 17, 18 im vorderen Bereich anschließende Filtergehäuse 19 und der darunter abgestellte Glasbehälter 20 werden teilweise in dieser konkaven Ausnehmung 21 aufgenommen werden. Der überwiegende Teil des Filtergehäuses 19 und des Glasbehälters 20 mit ihrer im wesentlichen halbzylindrischen Form schließen sich als Außenfläche 22, 23 an das äußere Behälterteil 3 nach vorne an. Der Glasbehälter 20 weist noch an seinem oberen Rand einen kreisringförmigen Ringbund 24 auf, an den sich ein Handgriff 25 anschließt. Der Glasbehälter 20 ist auf einer Warmhalteplatte 26 aufgesetzt, die von einem ringförmig ausgebildeten Bodenteil 27 umgeben ist. An das Bodenteil 27 schließt sich dann auf gleicher Höhe wie am äußeren Behälterteil 3 der Sockel 2 an. Das Bodenteil 27 verläuft nach den Figuren 1 bis 3 von der Warmhalteplatte 26 aus nach außen geringfügig konisch nach unten und endet in einem zylindrischen Abschnitt 28.

An den oberen Rand 29 des Filtergehäuses 19 schließt sich bündig ein halbkreiszylindrischer und scheibenförmig ausgebildeter Brühkopf 30 an, der an seiner Unterkante einen Auslaß 31 aufweist, wie dies in Fig. 3 gestrichelt dargestellt ist. Der Auslaß 31 läßt heißes Wasser in eine im Filtergehäuse 19 ausgebildete und nach unten sich konisch verjüngende Ausnehmung 32 einfließen, in der ein mit einem Extraktionsgut 33 befüllbarer Papierfilter 34 eingesetzt ist. Diese Teile sind in Fig. 3 gestrichelt dargestellt, da sie von außen nicht sichtbar sind. Der Auslaß 31 ist über eine Steigleitung 35 mit einem unterhalb der Warmhalteplatte 26 im Bodenteil 27 ausgebildeten elektrischen Wassererhitzer 36 verbunden, der über elektrische Leitungen 37 mit einem an der Vorderseite (Bereich A) ausgebildeten Aus-/Einschalter 38 steuerbar ist. Der elektrische Schalter 38 ist weiterhin über in der Zeichnung nicht dargestellte Leitungen mit einem aus der Brühgetränkemaschine 62 heraustretenden Anschlußkabel verbunden, das mit einem elektrischen Energieversorgungsnetz verbindbar ist.

Der Wassererhitzer 36 weist nach Fig. 3 eine Eingangsleitung 39 auf, die über die Leitung 40 mit dem Auslaß 41 verbunden ist. Der die Öffnung 61 bildende Auslaß 41 wird von einem Rohrstück 40a gebildet, das sich einstückig an den Boden 42 des äußeren Behälterteils 3 nach unten anschließt. Auch dieser Bereich wurde gestrichelt in Fig. 3 dargestellt, da er von außen nicht sichtbar ist. In den Auslaß 41 greift ein am inneren Behälterteil 4 am Boden 43 ausgebildetes Rohrstück 44 ein, das mit einer Dichtung 45 gegenüber der Gehäusewandung des Auslasses 41 gedichtet ist. Die Dichtung 45 besteht vorzugsweise aus einem O-Ring, der in einer in der Zeichnung nicht näher dargestellten Ringnut am Rohrstück 40a eingesetzt und ortsfest gehalten wird. Bei sehr engen Passungen von Auslaß 41 und Rohrstück 44 kann sogar bei gleicher Dichtwirkung die Dichtung 45 entfallen, wenn diese Flächen dauerhaft gefettet werden.

Der den Boden 42 des inneren Behälters 4 bildende Aufnahmeraum 46 dient als Aufnahmeraum eines Wasserfilters 47, wie er in Fig. 3 im inneren Behälterteil 4 zu erkennen ist, der an seinem oberen und unteren Ende Siebe (nicht zu erkennen) aufweist, die ein Durchfluß von Wasser nur durch den Wasserfilter 47 erlauben. Am oberen Sieb ist eine Handhabe 48 zu erkennen, die es ermöglicht, den Wasserfilter 47 leichter aus dem inneren Behälterteil 4 herauszunehmen. In Höhe des oberen Endes im Bereich des Siebes des Wasserfilters 47 erweitert sich der innere Behälterteil 4 und bildet den eigentlichen Aufnahmeraum für das kalte Wasser. Wie aus Fig. 3 zu erkennen ist, ist der innere Behälterteil 4 transparent ausgebildet, so daß neben der Wasserstandsanzeige auch der Wasserfilter 47 von außen gut sichtbar ist. Dieser ist zur Reinigung des Wassers mit einem Granulat 49 befüllbar.

An der Stirnfläche 50 des Brühkopfes 30 ist etwa, von der Mitte beginnend, ein kleines Podest 51 ausgebildet, an dessen nach oben zeigender Außenfläche 52 zwei nebeneinander angeordnete Betätigungsknöpfe 53, 54 drehbar ausgebildet sind, die wiederum mit einer nach vorne zeigenden Rippe 55, 56 versehen sind. Die Betätigungsknöpfe 53, 54 können beispielsweise den im unteren Bereich im zylindrischen Abschnitt 28 ausgebildeten elektrischen Schalter 38 vollständig ersetzen oder sie können zusätzlich als weitere Schalter dienen, die beispielsweise zum Betätigen einer Uhr oder sonstiger elektrischer Einrichtungen der Haushaltsbrühgetränkemaschine dienen. Die Betätigungsknöpfe 53, 54 können aber auch beispielsweise als Betätigungselemente für Entriegelungsvorrichtungen des inneren Behälterteils 3 oder auch des Filtergehäuses 19 dienen. Sie können aber auch vorteilhaft als Einstellknöpfe einer Wasserdosiereinrichtung zur Bestimmung des Aromas eines Brühgetränkes oder auch als Verbrauchsanzeige des Wasserfilters etc. dienen.

Die äußere Ebene des Deckels 10 liegt auf derselben äußeren Ebene wie die Oberfläche 52 des Podestes 51. Der Deckel 10 ist an zwei Gelenkscharnieren 57 nach oben aufklappbar und weist an seinem anderen Ende einen Vorsprung 58 auf, der ein Öffnen des Deckels 10 von Hand erleichtert.

Die Wirkungsweise der Haushaltsbrühgetränkemaschine ist folgende:

Ist der innere Behälterteil 4 in den äußeren Behälterteil 3 ordnungsgemäß eingesetzt, wie dies nur die Fig. 1 zeigt, so kann nach Öffnen des Deckels 10 Wasser in den inneren Behälterteil 4 bis zum maximalen Füllstand, der durch die Zahl 10 angezeigt ist, eingefüllt werden. Nach Schließen des Deckels 10 kann nunmehr die Maschine entweder über den elektrischen Schalter 38 oder, wenn dieser nicht vorhanden ist, über einen der Betätigungsknöpfe 53, 54 eingeschaltet werden. Das bereits von dem Wasserfilter 47 gereinigte und zum Rohrstück 44 geflossene Wasser fließt weiterhin dann über den Auslaß 41 und die Leitung 40 zur Eingangsleitung 39 des Wassererhitzers 36, wo das Wasser mittels der im Wassererhitzer 36 ausgebildeten Heizwendel (nicht dargestellt) aufgeheizt wird. Das kochende Wasser wird aufgrund der einsetzenden Dampfblasenbildung über die Steigleitung 35 dem Brühkopf 30 zugeführt, an dessen Auslaß 31 es in den mit dem Extraktionsgut 33, wie beispielsweise Kaffeemehl, befüllbaren Papierfilter 34 einfließt. Nach Extraktion fließt dann das fertige Brühgetränk am Auslaß 59 des Filtergehäuses 19 ab, von wo es in den Glasbehälter 20 abfließt. Nachdem alles Wasser den Wassererhitzer 36 passiert hat, und als Brühgetränk in den Glasbehälter 20 abgeflossen ist, schaltet ein in der Haushaltsbrühgetränkemaschine ausgebildeter elektrischer Thermostat (nicht dargestellt) den Wassererhitzer 36 ab und steuert nunmehr nur noch die Temperatur der Warmhalteplatte 26.

Nach häufigem Gebrauch kann der innere Behälterteil 4 verschmutzen, der aber leicht aus dem äußeren Behälterteil 3 herausgehoben werden kann. Auch dann, wenn noch wenig Flüssigkeit im inneren Behälterteil 4 vorhanden ist, kann dieser problemlos aus dem äußeren Behälterteil 3 herausgenommen werden, da, wenn das Wasser am Rohrstück 44 abfließt, in den äußeren Behälterteil 3 gelangt, der aber wiederum über den Auslaß 41 mit der Leitung 40 dichtend verbunden ist. Um zu verhindern, daß im inneren Behälterteil 4 befindliches Wasser nicht in den äußeren Behälterteil 3 gelangt, ist zwischen dem Auslaß 41 und dem Rohrstück 44 ein O-Ring 45 in vorteilhafter Weise ausgebildet.

Nachdem der innere Behälterteil 4 aus dem äußeren Behälterteil 3 herausgenommen wurde, kann der darin befindliche Wasserfilter 47 leicht entnommen werden und der innere Behälterteil 4 kann in einer Geschirrspülmaschine problemlos von allen Seiten gereinigt werden. Nach dessen Reinigung kann ein neuer Wasserfilter 47 mit neuem Granulat 49 in (komplette Kartusche) den Aufnahmeraum 46 eingesetzt werden. Anschließend wird durch Umgreifen des oberen Endes 5 im Bereich des Rippen 11 der innere Behälterteil 4 wieder in den Aufnahmeraum 59 des äußeren Behälterteils 3 eingesetzt und soweit abgesenkt, bis er die in Fig. 1 dargestellte Betriebsstellung erreicht hat.

Fig. 2 hingegen zeigt eine Zwischenstellung des inneren Behälterteils 4 während seines Einsetzens in das äußere Behälterteil 3. Beim Einsetzen des inneren Behälterteils 4 zentriert sich dieses über seine Außenwandug 12 an der Innenwandung 60 des äußeren Behälterteils 3, so daß der innere Behälter 4 infolge seiner Schwerkraft von selbst in seine Betriebslage gelangt, wenn der innere Behälterteil 4 losgelassen wird. Durch die konzentrische Führung des inneren Behälterteils 4 gegenüber dem äußeren Behälterteil 3 gleitet das Rohrstück 44 konzentrisch in den Auslaß 41 hinein und dichtet sich über die Dichtung 45 von selbst. Die Dichtung 45 kann auch aus einer an eines dieser Teile 44, 41 angespritzte Dichtlippe (nicht dargestellt) bestehen.

## Patentansprüche

1. Kaltwasservorratsbehälter (1) für eine elektrische Haushaltsbrühgetränkemaschine (62) mit einem Auslaß (41) zum Abfließen von in ihm enthaltenem Kaltwasser, welches nach Inbetriebnahme der Brühgetränkemaschine (62) aus diesem einem Wassererhitzer (36) und anschließend einem Extrakationsgut (33) zum Aufbrühen eines Brühgetränks zugeführt wird, daß der Auslaß (41) mit der Wassereingangsseite (39) des Wassererhitzers (36) in Strömungsverbindung steht, daß der Kaltwasservorratsbehälter (1) an seinen Seiten- und Bodenwänden doppelwandig ausgebildet ist, daß ein durch die inneren Seiten- und Bodenwände (62, 43) gebildeter innerer Behälterteil (4) aus dem durch die äußeren Seiten- und Bodenwände (9, 42) gebildeten äußeren Behälterteil (3) herausnehmbar ist und daß am inneren Behälterteil (4) eine Öffnung (61) ausgebildet ist, die bei in den äußeren Behälterteil (3) eingesetztem inneren Behälterteil (4) mit dem Auslaß (41) des Kaltwasservorratsbehälters (1) dichtend verbunden ist,
**dadurch gekennzeichnet**,
daß die innere Seitenwand (12) des inneren Behälterteils (4) verschieden weit aus der Seitenwand (9) des äußeren Behälterteils (3) herausragt.

2. Kaltwasservorratsbehälter nach Anspruch 1,
**dadurch gekennzeichnet**,
daß der herausragende Teil (8) der Seitenwand (12) des inneren Behälterteils (4) mit mindestens einer Handhabe (11) versehen ist.

3. Kaltwasservorratsbehälter nach Anspruch 2,
**dadurch gekennzeichnet**,
daß die Handhabe (11) von einer Vertiefung oder mindestens einer Rippe gebildet wird.

4. Kaltwasservorratsbehälter nach Anspruch 1,
**dadurch gekennzeichnet**,
daß der Kaltwasservorratsbehälter (1) von einem am oberen Rand (7) des inneren Behälterteils (4) abnehmbar angebrachten Deckel (10) verschließbar ist.

5. Kaltwasservorratsbehälter nach Anspruch 1,
**dadurch gekennzeichnet**,
daß an der Seitenwand (12) des inneren Behälterteils (4) ein nach außen hervorstehender und umlaufender Ansatz (11) ausgebildet ist, der bei eingesetztem inneren Behälterteil (4) den oberen Rand (6) des äußeren Behälterteils (3) abdeckt.

6. Kaltwasservorratsbehälter nach Anspruch 1,
**dadurch gekennzeichnet**,
daß der innere Behälterteil (4) transparent ist.

7. Kaltwasservorratsbehälter nach Anspruch 5,
**dadurch gekennzeichnet**,
daß der äußere Behälterteil (3) einen Durchbruch (14) aufweist, durch den ein Teil der Seitenwandung (12) des inneren Behälterteils (4) sichtbar ist.

8. Kaltwasservorratsbehälter nach Anspruch 6,
**dadurch gekennzeichnet**,
daß in Höhe des Durchbruchs (14) an der Außenwandung (12) des inneren Behälterteils (4) eine Meßskala (16) ausgebildet ist.

9. Kaltwasservorratsbehälter nach Anspruch 1,
**dadurch gekennzeichnet**,
daß der äußere Behälterteil (3) eine andere Farbe aufweist als der innere Behälterteil (4).

10. Kaltwasservorratsbehälter nach Anspruch 1,
**dadurch gekennzeichnet**,
daß am Boden (43) des inneren Behälterteils (4) ein Aufnahmeraum (46) für einen Wasserfilter (47) ausgebildet ist.

11. Kaltwasservorratsbehälter nach Anspruch 1,
**dadurch gekennzeichnet**,
daß zwischen dem inneren (4) und äußeren (3) Behälterteil Sperrmittel vorgesehen sind, die bei in den äußeren Behälterteil (3) eingesetztem inneren Behälterteil (4) beide Behälterteile (3, 4) mechanisch lösbar miteinander verbinden.

## Claims

1. A cold water reservoir (1) for an electric beverage brewing machine (62) for domestic use, having an outlet (41) for the discharge of cold water contained therein, which cold water, following starting of the beverage brewing machine (62), is delivered from said reservoir to a water heater (36) and subsequently to a material to be extracted (33) for brewing a brewed beverage, said outlet (41) being in fluid communication with the water inlet side (39) of the water heater (36), the side and base walls of said cold water reservoir (1) being of a double-walled configuration, a reservoir inner section (4) which is formed by inner side and base walls (62, 63) being removable from a reservoir outer section (3) which is formed by outer side and base walls (9, 42), and an orifice (61) being formed on the reservoir inner section (4), which orifice, with the reservoir inner section (4) inserted in the reservoir outer section (3), is in sealing engagement with the outlet (41) of the cold water reservoir (1),
**characterized in that** the inner side wall (12) of the reservoir inner section (4) protrudes from the side wall (9) of the reservoir outer section (3) by different amounts.

2. The cold water reservoir as claimed in claim 1,
**characterized in that** the protruding portion (8) of the side wall (12) of the reservoir inner portion (4) is provided with at least one handhold (11).

3. The cold water reservoir as claimed in claim 2,
**characterized in that** the handhold (11) is formed by a recess or at least one rib.

4. The cold water reservoir as claimed in claim 1,
**characterized in that** the cold water reservoir (1) is adapted to be closed by a lid (10) releasably attached to the upper edge (7) of the reservoir inner section (4).

5. The cold water reservoir as claimed in claim 1,
**characterized in that** the side wall (12) of the reservoir inner section (4) is provided with an outwardly projecting and circumferential shoulder (11) covering the upper edge (6) of the reservoir outer section (3) when the reservoir inner section (4) is in inserted condition.

6. The cold water reservoir as claimed in claim 1,
**characterized in that** the reservoir inner section (4) is transparent.

7. The cold water reservoir as claimed in claim 5,
**characterized in that** the reservoir outer section (3) includes an opening (14) through which part of the side wall (12) of the reservoir inner section (4) is visible.

8. The cold water reservoir as claimed in claim 6,
**characterized in that** graduations (16) are provided on the outer wall (12) of the reservoir inner section (4) at the level of the opening (14).

9. The cold water reservoir as claimed in claim 1,
**characterized in that** the reservoir outer section (3) differs in color from the reservoir inner section (4).

10. The cold water reservoir as claimed in claim 1,
**characterized in that** a receptacle (46) for a water filter (47) is formed at the base (43) of the reservoir inner section (4).

11. The cold water reservoir as claimed in claim 1,
**characterized in that** between the reservoir inner (4) and outer (3) section locking means are provided which mechanically releasably connect the two reservoir sections (3, 4) when the reservoir inner section (4) is inserted in the reservoir outer section (3).

## Revendications

1. Réservoir d'eau froide destiné à un appareil électroménager (62) permettant de préparer des boissons chaudes, comportant une sortie (41) d'écoulement d'eau froide contenue dans celui-ci, laquelle est amenée, après mise en route de l'appareil à préparer les boissons chaudes (62), depuis ledit réservoir vers un chauffe-eau (36) et ensuite à un produit d'extraction (33) pour préparer une boisson chaude, la sortie (41) étant en liaison d'écoulement avec le côté d'entrée d'eau (39) du chauffe-eau (36), le réservoir d'eau froide (1) étant réalisé à double paroi sur ses parois latérales et sa paroi de fond, une partie intérieure de réservoir (4) formée par les parois intérieures latérales et de fond (62, 43) étant susceptibles d'être extraite hors de la partie extérieure de réservoir (3) formée par les parois extérieures latérales et de fond (9, 42), et une ouverture (61) étant réalisée sur la partie intérieure de réservoir (4), ladite ouverture étant reliée de manière étanche avec la sortie (41) du réservoir d'eau froide lorsque la partie intérieure de réservoir (4) est mise en place dans la partie extérieure de réservoir (3), caractérisé en ce que la paroi latérale intérieure (12) de la partie intérieure de réservoir (4) fait saillie de manière différemment éloignée hors de la paroi latérale (9) de la partie extérieure de réservoir (3).

2. Réservoir d'eau froide selon la revendication 1, caractérisé en ce que la partie en saillie (8) de la paroi latérale (12) de la partie intérieure de réservoir (4) est pourvue d'au moins un élément de manipulation.

3. Réservoir d'eau froide selon la revendication 2, caractérisé en ce que l'élément de manipulation (11) est formé par un creux ou au moins une nervure.

4. Réservoir d'eau froide selon la revendication 1, caractérisé en ce que le réservoir d'eau froide (1) est susceptible d'être fermé par un couvercle (10) posé amovible sur le bord supérieur (7) de la partie intérieure de réservoir (4)

5. Réservoir d'eau froide selon la revendication 1, caractérisé en ce que sur la paroi latérale (12) de la partie intérieure de réservoir (4) est formé un épaulement (11) périphérique qui fait saillie vers l'extérieur, lequel recouvre le bord supérieur (6) de la partie extérieure de réservoir (3) lorsque la partie intérieure de réservoir (4) est mise en place.

6. Réservoir d'eau froide selon la revendication 1, caractérisé en ce que la partie intérieure de réservoir (4) est transparente.

7. Réservoir d'eau froide selon la revendication 5, caractérisé en ce que la partie extérieure de réservoir (3) présente une traversée (14) à travers laquelle une partie de la paroi latérale (12) de la partie intérieure de réservoir (4) est visible.

8. Réservoir d'eau froide selon la revendication 6, caractérisé en ce qu'une graduation de mesure (16) est réalisée dans la paroi extérieure (12) de la partie intérieure de réservoir (4) au niveau de la traversée (14).

9. Réservoir d'eau froide selon la revendication 1, caractérisé en ce que la partie extérieure de réservoir (3) présente une autre couleur que la partie intérieure de réservoir (4).

10. Réservoir d'eau froide selon la revendication 1, caractérisé en ce qu'une chambre de réception (46) pour un filtre à eau (47) est réalisée sur le fond (43) de la partie intérieure de réservoir (4).

11. Réservoir d'eau froide selon la revendication 1, caractérisé en ce qu'il est prévu entre les parties de réservoir intérieure (4) et extérieure (3) des moyens de blocage qui relient mécaniquement l'une à l'autre et de manière amovible les deux parties de réservoir (3, 4) lorsque la partie intérieure de réservoir (4) est mise en place dans la partie extérieure de réservoir (3).
